# EUROPEAN PATENT APPLICATION

(11) **EP 4 832 389 A1**
(43) Date of publication of application: **28.10.2026**
(21) Application number: 24919240.2
(22) Date of filing: 23.01.2024
(51) Int. Cl.: H04L 1/1812, H04W 28/06

(54) **DATA TRANSMISSION METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN)
(74) Representative: Taor, Simon Edward William
(86) International application number: PCT/CN2024/073705
(87) International publication number: WO 2025/156122

(57) **Abstract**

A data transmission method and apparatus, and a device and a storage medium, which relate to the technical field of communications. The method is executed by a terminal device. The method comprises: when a first condition is met, executing a first behavior, wherein the first behavior comprises at least one of the following: stopping or disabling or pausing a first timer, refraining from transmitting data, clearing a buffer, and clearing an HARQ process (210). By means of implementing the method, when a first condition is met, a terminal device executes a first behavior and does not transmit data anymore, such that resources can be effectively prevented from being wasted by transmitting data that does not meet the condition, thereby improving system capacity.

## Description

### TECHNICAL FIELD

Embodiments of the present application relate to the field of communication technology, and in particular to a data transmission method and apparatus, a device and a storage medium.

### BACKGROUND

Currently, with the development of wireless transmission technologies, there is an increasing pursuit of data rates, latency, high-speed mobility, and energy efficiency, alongside higher requirements for the diversity and complexity of services in future life. Since data transmission needs to satisfy its corresponding latency requirements, how to ensure the data transmission latency during scheduling while also guaranteeing the throughput of the overall system requires further discussion and research.

### SUMMARY

Embodiments of the present disclosure provide a data transmission method and apparatus, a device, and a storage medium. The technical solutions are as follows.

According to an aspect of the embodiments of the present disclosure, there is provided a data transmission method. The method is performed by a terminal device and includes the following operation.

A first behavior is performed if the first condition is satisfied. The first behavior includes at least one of: stopping a first timer, not enabling the first timer, suspending the first timer, not transmitting data, flushing a buffer, or clearing a hybrid automatic repeat request (HARQ) process.

According to an aspect of the embodiments of the present disclosure, there is provided a data transmission apparatus. The apparatus is implemented by a terminal device and includes a processing module.

The processing module is configured to perform a first behavior if a first condition is satisfied. The first behavior includes at least one of: stopping a first timer, not enabling the first timer, suspending the first timer, not transmitting data, flushing a buffer, or clearing a HARQ process.

According to an aspect of the embodiments of the present disclosure, there is provided a terminal device. The terminal device includes a processor and a memory for storing a computer program. The processor executes the computer program to implement the above data transmission method.

According to an aspect of the embodiments of the present disclosure, there is provided a computer-readable storage medium having a computer program stored thereon. The computer program is executed by a processor to implement the above data transmission method.

According to an aspect of the embodiments of the present disclosure, there is provided a chip. The chip includes programmable logic circuitry and/or program instructions, and when the chip is running, the chip is configured to implement the above data transmission method.

According to an aspect of the embodiments of the present disclosure, there is provided a computer program product. The computer program product includes computer instructions stored in a computer-readable storage medium, and a processor reads and executes the computer instructions from the computer-readable storage medium to implement the above data transmission method.

The technical solutions provided by the embodiments of the present disclosure may include the following beneficial effects.

According to the technical solutions provided by the embodiments of the present disclosure, when the first condition is satisfied, the terminal device performs the first behavior and no longer transmits data, which can effectively avoid wasting resources to transmit data that does not meet the condition, thereby improving the system capacity.

### BRIEF DESCRIPTION OF THE DRAWINGS

FIG. 1 is a schematic diagram of a network architecture according to an embodiment of the present disclosure.
FIG. 2 is a flowchart of a data transmission method according to an embodiment of the present disclosure.
FIG. 3 is a block diagram of a data transmission apparatus according to an embodiment of the present disclosure.
FIG. 4 is a schematic structural diagram of a terminal device according to an embodiment of the present disclosure.

### DETAILED DESCRIPTION

In order to make the objectives, technical solutions and advantages of the present disclosure clearer, the following further describes embodiments of the present disclosure in detail with reference to the accompanying drawings.

The network architecture and service scenarios described in the embodiments of the present disclosure are intended to illustrate the technical solutions of the embodiments of the present disclosure more clearly, and do not constitute a limitation to the technical solutions provided by the embodiments of the present disclosure. A person of ordinary skill in the art may know that, with the evolution of network architecture and the emergence of new service scenarios, the technical solutions provided by the embodiments of the present disclosure are equally applicable to similar technical problems.

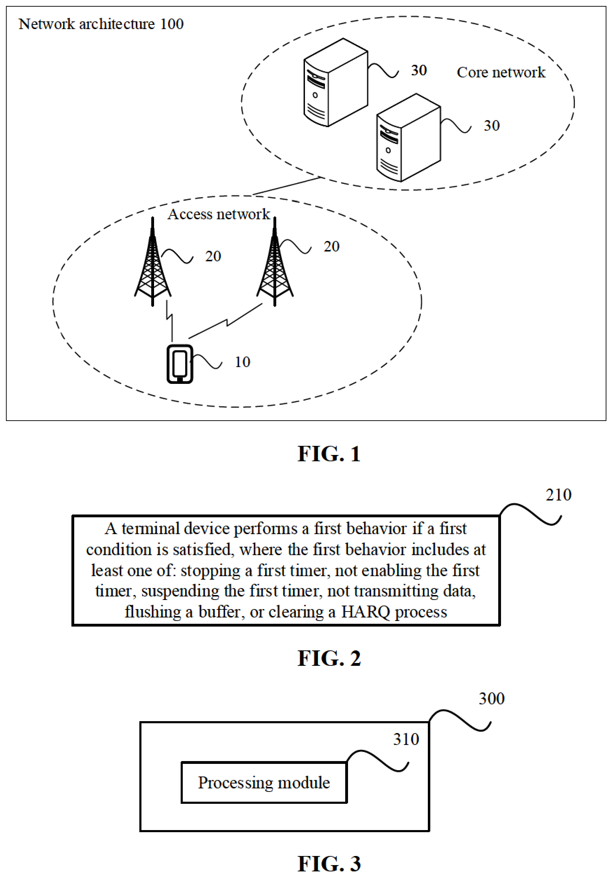

FIG. 1 illustrates a schematic diagram of a network architecture 100 according to an embodiment of the present disclosure. The network architecture 100 may include a terminal device 10, an access network device 20, and a core network element 30.

The terminal device 10 may be referred to as a user equipment (UE), a station (STA), an access terminal, a subscriber unit, a subscriber station, a mobile station, a mobile radio station, a remote station, a remote terminal, a mobile device, a wireless communication device, a user agent, or a user device. In some embodiments, the terminal device 10 may also be a cellular telephone, a cordless telephone, a Session Initiation Protocol (SIP) telephone, a Wireless Local Loop (WLL) station, a Personal Digital Assistant (PDA), a handheld device having a wireless communication function, a computing device or other processing device connected to a wireless modem, a vehicle-mounted device, a wearable device, a terminal device in the 5th Generation System (5GS) or a terminal device in a future evolution Public Land Mobile Network (PLMN), etc., which is not limited in the embodiments of the present disclosure. For convenience of description, the above-mentioned devices are collectively referred to as terminal devices. There are usually multiple terminal devices 10, and one or more terminal devices 10 may be distributed in a cell managed by each access network device 20. The terminal device may also be simply referred to as a terminal or a UE, and the meaning thereof can be understood by those skilled in the art.

The access network device 20 is a device deployed in an access network for providing a wireless communication function for the terminal device 10. The access network device 20 may include various forms of macro base stations, micro base stations, relay stations, access points (APs), and the like. In systems employing different wireless access technologies, devices having access network device functions may be given different names. For example, such a device may be referred to as a gNodeB or gNB (next generation Node B) in a 5G new radio (NR) system. The name "access network device" may change as communication technologies evolve. For ease of description, in the embodiments of the present disclosure, the above devices providing a wireless communication function to the terminal device 10 may be collectively referred to as access network devices. In some embodiments, communication between the terminal device 10 and the core network element 30 may be established through the access network device 20. Exemplarily, in a long term evolution (LTE) system, the access network device 20 may be an evolved universal terrestrial radio access network (EUTRAN) or one or more eNodeBs in the EUTRAN; and in a 5G NR system, the access network device 20 may be a radio access network (RAN) or one or more gNBs in the RAN. In the embodiments of the present disclosure, the "network device" refers to the access network device 20, such as a base station, unless otherwise specified.

The core network element 30 is a network element deployed in the core network. The core network element 30 mainly serves to provide user connection, manage users and carry services, and serve as an interface between the bearer network and the external network. For example, a core network element in a 5G NR system may include network elements such as an access and mobility management function (AMF) entity, a user plane function (UPF) entity, and a session management function (SMF) entity, etc.

In some embodiments, the access network device 20 and the core network element 30 communicate with each other through some air interface technology, such as an NG interface in a 5G NR system. The access network device 20 and the terminal device 10 communicate with each other through some air interface technology, such as a Uu interface.

The "5G NR system" in the embodiments of the present disclosure may also be referred to as a 5G system or an NR system, but those skilled in the art can understand the meaning thereof. The technical solutions described in the embodiments of the present disclosure may be applicable to an LTE System, a 5G NR System, a subsequent evolution System of the 5G NR System (for example, a Beyond 5G (B5G) System, a 6th Generation (6G) System, or other communication systems such as a Narrow Band Internet of Things (NB-IoT) System, which is not limited in the present disclosure.

In the embodiments of the present disclosure, the network device may provide services for a cell, and the terminal device communicates with the network device through transmission resources (for example, frequency domain resources, or frequency spectrum resources) on a carrier used by the cell. The cell may be a cell corresponding to the network device (for example, a base station), and the cell may belong to a macro base station or a base station corresponding to a Small cell. The Small cell here may include a Metro cell, a Micro cell, a Pico cell, a Femto cell, and the like. These Small cells have the characteristics of small coverage and low transmission power, and are suitable for providing high-speed data transmission services.

Before introducing the technical solutions of the present disclosure, some related technical knowledge related to the present disclosure will be described. The following related technologies as alternative solutions can be arbitrarily combined with the technical solutions of the embodiments of the present disclosure, and shall fall within the scope of protection of the embodiments of the present disclosure. The embodiments of the present disclosure include at least part of the following contents.

Currently, with people's pursuit of data rates, latency, high-speed mobility, and energy efficiency, as well as the diversity and complexity of services in future life, the 3rd Generation Partnership Project (3GPP) international standards organization has started to develop 5G. The main application scenarios of 5G include: Enhanced Mobile Broadband (eMBB), Ultra Reliable Low Latency Communication (URLLC), and Massive Machine Type Communication (mMTC).
eMBB still aims at enabling users to access multimedia content, services, and data, and its demand is growing very rapidly. On the other hand, since eMBB may be deployed in different scenarios, such as indoors, urban areas, and rural areas, the differences in capabilities and demands are also significant, so it cannot be generalized and must be analyzed in detail in combination with specific deployment scenarios. Typical applications of URLLC include: industrial automation, power automation, remote medical operations (surgery), transportation safety assurance, and the like. Typical characteristics of mMTC include: high connection density, small data volume, delay-insensitive services, low cost and long service life of modules, and the like.

NR can also be deployed independently. In a 5G network environment, for the purpose of reducing air interface signaling, quickly restoring wireless connections, and quickly restoring data services, a new Radio Resource Control (RRC) state, i.e., an RRC_INACTIVE state, is defined. This state is different from the RRC_IDLE state and RRC_ACTIVE state.

RRC_IDLE: Mobility is UE-based cell selection/reselection, paging is initiated by a core network (CN), and a paging area is configured by the CN. There is no UE access stratum (AS) context on the base station side. There is no RRC connection.

RRC_CONNECTED (RRC connection state): There is an RRC connection, and there is a UE AS context in both the base station and the UE. The network side knows that the location of the UE is at a specific cell level. Mobility is network-controlled mobility. Unicast data may be transmitted between the UE and the base station.

RRC_INACTIVE: Mobility is UE-based cell selection/reselection, there is a connection between CN and NR, the UE AS context exists on a certain base station, paging is triggered by the RAN, and the RAN-based paging area is managed by the RAN. The network side knows that the location of the UE is at the RAN-based paging area level.

In the related art, a research project named "eXtended Reality (XR) and cloud game (CG) evaluations for NR" has been approved, and the services studied in this project include AR (Augmented Reality)/VR (Virtual Reality)/cloud gaming, etc. One of the main services of XR/CG is the video stream service, the arrival rate of which (measured in fps, i.e., frames per second) can be 30 fps, 60 fps, 90 fps, or 120 fps, and the corresponding period of the video stream is {33.33 ms, 16.67 ms, 11.11 ms, 8.33 ms}.

The characteristics of XR data include variable packet sizes with a large mean value. Taking AR/VR with a data rate of 100 Mbps as an example, its average uplink packet size is 20,833 bytes, with a maximum value of 31,250 bytes and a minimum value of 10,417 bytes. That is, the size of the data packet to be transmitted within each period is between [10,417 bytes, 31,250 bytes]. In a practical system with a 100M bandwidth, transmission of a packet of 20,833 bytes requires occupying transmission resources in approximately 4 slots.

Currently, the 3GPP has determined that it supports configuring multiple physical uplink shared channel (PUSCH) occasions within one Configured Grant (CG) period to transmit large XR packets, and it is also possible to transmit large XR packets by configuring multiple sets of CGs. When the data amount of a certain data transmission is relatively small and does not need to occupy the multiple pre-configured PUSCH occasions, the UE may notify the base station of the unused PUSCH occasions. The base station can reallocate the unused PUSCH occasions to other UEs for data transmission, thereby improving system efficiency.

The application layer data exchanged between the UE and an application server or a peer UE, such as AR/VR, cloud gaming, and live video streaming, typically includes data streams in various modes such as voice, video, text, control information, etc. These data streams generally require synchronization between data streams, for example, data such as voice, video, and subtitles need to be synchronously presented to the user. Currently, the practice for video playback is to perform synchronization between multiple data streams through the application layer, such as caching multiple received data streams, extracting corresponding data frames of the multiple data streams based on the timestamps of the playback data streams and displaying them to the user synchronously.

In addition, since service transmission, such as XR services, has latency requirements, how to consider latency in scheduling to ensure service transmission latency while also ensuring the overall system throughput needs to be considered.

FIG. 2 illustrates a flowchart of a data transmission method according to an embodiment of the present disclosure. The method is performed by a terminal device. The method includes the following operation in 210.

In 210, in case that a first condition is satisfied, the terminal device performs a first behavior. The first behavior includes at least one of: stopping a first timer, not enabling the first timer, suspending the first timer, not transmitting data, flushing a buffer, or clearing a hybrid automatic repeat request (HARQ) process.

In some embodiments, the first condition is associated with a delay of the data. In some embodiments, the first condition is determined based on the delay of the data. In some embodiments, the first condition may be predefined or preconfigured, which is not limited in the present disclosure.

In some embodiments, the first timer is associated with data transmission. In some embodiments, the first timer is associated with data retransmission. In some embodiments, the first timer is stopped or suspended, and data transmission is no longer performed. In some embodiments, the first timer is stopped or suspended, and data retransmission is no longer performed. In some embodiments, the first timer is not enabled, and data transmission is not performed. In some embodiments, the first timer is not enabled, and data retransmission is not performed.

In some embodiments, if the suspended first timer is restarted, the first timer may be run based on a configurated duration of the first timer, or may be run based on a suspension state of the first timer, which is not limited in the present disclosure. In some embodiments, the suspension state of the first timer refers to the remaining duration of the first timer when the first timer is suspended. Exemplarily, the configurated duration of the first timer is 10 s, and the first timer is suspended after running for 4 s. If the first timer is restarted, the first timer may be run based on the configurated duration of 10s of the first timer, or may be run based on the remaining duration of 6 s of the first timer.

In some embodiments, not transmitting data may be deleting data, or may be not deleting data and not transmitting data, which is not limited in the present disclosure. In some embodiments, flushing the buffer refers to flushing data stored by the terminal device. Exemplarily, the HARQ buffer is flushed. In some embodiments, clearing the HARQ process refers to clearing the HARQ process used to transmit data. In some embodiments, execution of any one or more of the first behavior by the terminal device may cause the terminal device to no longer perform data transmission.

In some embodiments, the data may be a media access control protocol data unit (MAC PDU), a MAC sub-PDU, a service data unit (SDU), a packet, or other forms, which are not limited in the present disclosure.

In some embodiments, the first timer includes at least one of: a configured grant timer (CGT), a configured grant retransmission timer (CGRT), a HARQ round-trip time (RTT) timer, or a HARQ retransmission timer.

In some embodiments, the HARQ RTT timer includes an uplink (UL) HARQ RTT timer and/or a downlink (DL) HARQ RTT timer.

In some embodiments, the HARQ retransmission timer includes an UL HARQ retransmission timer and/or a DL HARQ retransmission timer.

In some embodiments, the CGT is used to protect the HARQ buffer from being overwritten by new data. If the CGT is not running at a configured grant occasion, the new data indicator (NDI) is toggled, and the HARQ buffer is overwritten by new data. The CGT is started when an uplink grant addressed to a cell-radio network temporary dentifier (C-RNTI) or a configured scheduling-RNTI (CS-RNTI) is received for a HARQ process configured for the configured grant, or when an uplink transmission is performed for a HARQ process configured for the configured grant. The CGT is stopped when the configured grant Type 2 is activated, so that the HARQ buffer can be updated before a new configuration is applied.

In some embodiments, the CGRT is used to trigger an autonomous retransmission using the configured grant. When the timer expires, the UE considers that a negative acknowledgment for the corresponding HARQ process has been received, and starts a retransmission on the next available configured grant occasion. The timer is started when a transport block is transmitted on the configured grant, and the new timer is stopped when HARQ Feedback (e.g., downlink feedback information (DFI)) or dynamic grant for the HARQ process is received. The conventional configured grant timer and behavior are retained to prevent the configured grant from overriding a transport block scheduled by a dynamic grant, that is, for a HARQ process configured for the configured grant, the timer is started upon reception of a physical downlink control channel (PDCCH) for an uplink grant addressed to a C-RNTI or a CS-RNTI and a transmission on a PUSCH of the dynamic grant. However, since the CGT and the CGRT can coexist, the interaction and behavior between these two timers need to be specified.

In some embodiments, the HARQ RTT timer represents the minimum duration before a DL assignment for HARQ retransmission is expected by the MAC entity, which is used for UE energy saving and defines the minimum start time of the retransmission.

In some embodiments, for each DL HARQ process, except for the broadcast process, the HARQ retransmission timer represents the maximum duration before DL retransmission is received. According to the UL HARQ process, the HARQ retransmission timer represents the maximum duration until an UL retransmission grant is received. In some embodiments, the HARQ retransmission timer is used for the UE to monitor retransmission scheduling and perform PDCCH monitoring

In some embodiments, the first condition is determined based on at least one of: a first duration, a second timer, a first information, a transmission situation of the data, a delay of the data. The second timer is used to control a transmission time of the data or a storage time of the data, and the first information is used to configure or indicate whether to allow the terminal device to perform the first behavior.

In some embodiments, when the first condition is determined based on the first duration or the first timer, the first condition is that the first duration is exceeded, or the second timer expires, or is not running, or stops. In some embodiments, the duration of the second timer is the first duration. In some embodiments, the first duration is represented by the first timer.

In some embodiments, when the first condition is determined based on the first information, the method further includes the operation in 220.

In 220, the terminal device receives the first information transmitted by a network device.

Correspondingly, the network device transmits the first information to the terminal device.

In some embodiments, the first information is configured or indicated by the network device to the terminal device.

In some embodiments, the transmission situation of the data includes at least one of: delay status report (DSR) information is reported for the data, a PDU, or an SDU; the DSR information includes the data or PDU or SDU; a MAC PDU has been packeted/assembled; the data or PDU or SDU is packeted or transmitted; the MAC PDU includes the data or PDU or SDU that satisfies a delay condition or situation; or, data or PDUs or SDUs included in the MAC PDU are all data or SDUs satisfying the delay condition or situation.

In some embodiments, when the first condition is determined based on a delay situation of the data, the first condition is that the delay of the data is less than or equal to a first threshold; or, the first condition is that the data has a specific delay requirement.

In some embodiments, the terminal device does not transmit data after performing the first behavior, and in such case, if the network device has received the data, the network device may inform the terminal device that the data has been successfully received. The method may further include the operation in 230.

In 230, the terminal device receives second information transmitted by the network device. The second information indicates that the network device has successfully received the data.

Correspondingly, the network device transmits the second information to the terminal device.

In some embodiments, the first information may be feedback information for the MAC PDU, feedback information for the HARQ process, feedback information for the data, or feedback information for the PUSCH. Exemplarily, the first information may be feedback information for the Radio Link Control (RLC) SDU/PDU, or may be feedback information for the Packet Data Convergence Protocol (PDCP) PDU/SDU.

In some embodiments, the first information may be acknowledgement/acknowledge character (ACK) information.

In some embodiments, the first information may be negative acknowledgement (NACK) information, or rescheduling information, or downlink feedback indication (DFI) information.

In some embodiments, the first information may be carried by a status report, may be carried by HARQ ACK/NACK, may be carried by a PDCCH, or may be carried by a DFI, which is not limited in the present disclosure.

In some embodiments, if the network device does not receive the data, the network device may instruct the terminal device to retransmit the data to ensure that the network device can successfully acquire the data. The method may further include the operation in 240.

In 240, the terminal device receives third information transmitted by the network device. The third information is used to instruct the terminal device to retransmit data.

Correspondingly, the network device transmits the third information to the terminal device.

In some embodiments, the terminal device retransmits the data after receiving the third information.

In some embodiments, the third information may be rescheduling information for the MAC PDU, feedback information for the HARQ process, feedback information for the data, or rescheduling information for the PUSCH. Exemplarily, the third information may be feedback information for the RLC SDU/PDU, or may be feedback information for the PDCP PDU/SDU.

Through the above operation in 230 or 240, the terminal device can know whether the network device has received the data, and can retransmit the data when the network device has not received the data, thereby ensuring the transmission of the data.

According to the technical solutions provided by the embodiments of the present disclosure, when the first condition is satisfied, the terminal device performs the first behavior and no longer transmits data, which can effectively avoid wasting resources to transmit data that does not meet the condition, thereby improving the system capacity.

The embodiments of the present disclosure provide exemplary descriptions with respect to several cases of the first condition.

### 1. Determining the first condition based on the first duration or the first timer

In some embodiments, the first duration or the second timer may be configured for a terminal device or configured for an object used for transmitting data, which is not limited in the present disclosure.

In some embodiments, the first duration or the second timer is configured for at least one of: a data radio bearer (DRB), a terminal device, a HARQ process, a configured grant (CG), a dynamic grant (DG), a logical channel (LCH), a logical channel group (LCG), or a MAC entity.

In some embodiments, the first duration or the second timer may be maintained for a terminal device or an object used for transmitting data, which is not limited in the present disclosure.

In some embodiments, the maintenance of the first duration or the second timer may be understood as a practical application of the first duration or the second timer. In some embodiments, the granularity of configuration and the granularity of maintenance may be the same or different, which is not limited in the present disclosure.

In some embodiments, the first duration or the second timer is maintained for at least one of: a DRB, a terminal device, a HARQ process, a CG, a DG, an LCH, an LCG, a MAC entity, a MAC PDU, a triggered or pending DSR, or a DSR MAC control element (CE).

In some embodiments, an object for which the first duration or the second timer is configured and an object for which the first duration or the second timer is maintained may be the same or different, which is not limited in the present disclosure. Exemplarily, the first duration or the second timer is configured for the terminal device, and the first duration or the second timer is maintained for the terminal device. Exemplarily, the first duration or the second timer is configured for the terminal device, and the first duration or the second timer is maintained for a HARQ process.

In some embodiments, the first durations or the second timers configured for different objects may be the same or different, which is not limited in the present disclosure. Exemplarily, the first duration configured for a DRB is 5 s, and the first duration configured for a HARQ process is 8 s. Exemplarily, the first durations configured for the DRB and the HARQ process are both 5 s.

In some embodiments, if an object is configured with the first duration or the second timer, the first duration or the second timer may be maintained for the object. Exemplarily, when the first duration or the second timer is configured for the terminal device, the first duration or the second timer may be maintained for the terminal device.

In some embodiments, if an object is not configured with the first duration or the second timer, the first duration or the second timer is not maintained for the object. Exemplarily, if the first duration or the second timer is not configured for the terminal device, the first duration or the second timer is not maintained for the terminal device.

In some embodiments, if there is an object configured with the first duration or the second timer, the first duration or the second timer configured for the object may be applied when maintaining the first duration or the second timer for different objects. Exemplarily, the first duration or the second timer is configured for the terminal device, and when the first duration or the second timer is maintained for a HARQ process, the first duration or the second timer configured for the terminal device may also be applied.

In some embodiments, when there are a plurality of objects configured with the first duration or the second timer, if an object is configured with the first duration or the second timer, the first duration or the second timer may be maintained for the object; if an object is not configured with the first duration or the second timer, the first duration or the second timer is not maintained for the object.

In some embodiments, when there are a plurality of objects configured with the first duration or the second timer, if an object is configured with the first duration or the second timer, the first duration or the second timer may be maintained for the object; if an object is not configured with the first duration or the second timer, the first duration or the second timer configured for other objects may be applied for maintenance.

In some embodiments, if an object is not configured with the first duration or the second timer, the first duration or the second timer configured for any object may be applied for maintenance. In some embodiments, if an object is not configured with the first duration or the second timer, the first duration or the second timer configured for an object having an association relationship with the object may by applied for configuration. In some embodiments, the association relationship may be predefined or preconfigured, which is not limited in the present disclosure.

According to the above methods, a method for determining a maintenance object of the first duration or the second timer based on a configuration object of the first duration or the second timer in practical applications is provided.

In some embodiments, the first duration is associated with a length or running state of a PDCP discard timer.

It should be noted that the length of the timer mentioned in the embodiments of the present disclosure refers to the duration of the timer. For example, the length of the PDCP discard timer refers to the duration of the PDCP discard timer. It should be understood that if similar descriptions appear in the subsequent embodiments, the same understanding should be maintained as herein, which will not be elaborated in the present disclosure.

In some embodiments, if a PDCP PDU has no opportunity to be scheduled after being generated, both the PDCP PDU and corresponding PDCP SDU are discarded after the PDCP discard timer expires.

In some embodiments, the first duration is less than or equal to the length of the PDCP discard timer.

In some embodiments, the first duration may be associated with a configured length of the PDCP discard timer, or may be associated with a remaining length of the PDCP discard timer.

In some embodiments, the first duration is less than or equal to the configured length of the PDCP discard timer.

In some embodiments, the first duration is less than or equal to the remaining length of the PDCP discard timer.

In some embodiments, the first duration is associated with a packet delay budget (PDB) and/or a PDU set delay budget (PSDB).

In some embodiments, the PDB includes access network-PDB (AN AN-PDB), which represents the PDB of the access network, or an upper limit of the time for which packet transmission of the access network is delayed.

In some embodiments, the PDB defines an upper limit of the time for which a packet may be delayed between the UE and the UPF that terminates the N6 interface.

In some embodiments, an application may have a certain latency requirement for the PDU set, but the requirement cannot be fully translated into a packet delay budget requirement. For example, if the PSDB is 10 ms, the PDB can be set to 10 ms only when all packets of the PDU set arrive at the 5G system at the same time. If the packets are spread out, the PSDB is measured based on the arrival of the first packet of the PDU set or the last packet of the PDU set. In either case, a given PSDB will result in different PDB requirements for different packets of the PDU set. It has been observed that it may be beneficial to assign a PSDB to a 5G system. Therefore, it is useful to transmit a new 5G Quality of Service (QoS) identifier attribute (delay budget, error rate, etc.) based on the PDU set on the control plane. On the user plane, the application server may mark Internet Protocol (IP) packets to distinguish packets belonging to the same set and/or burst.

In some embodiments, the first duration is less than or equal to the length of the PDB.

In some embodiments, the first duration is less than or equal to the length of the PSDB.

In some embodiments, a start time of the first duration or the second timer is one of the following: a time when the data arrives at an AS layer of the terminal device, a time when the data arrives at a PDCP, a time when the PDCP receives the data, a start time of a PDCP discard timer, a triggering time of a DSR, a time when a DSR MAC CE is generated, a time when a MAC PDU containing the data is generated, a time when a MAC PDU containing the data is transmitted, a time when a grant containing the data is transmitted, a time when a grant corresponding to the data is transmitted, a time when a MAC PDU containing a DSR MAC CE is generated, a time of transmission of a MAC PDU containing a DSR MAC CE, a time of transmission of a grant or a packet containing a DSR MAC CE, or a time when a grant or a packet containing a DSR MAC CE is sent.

It should be noted that the "time when the data arrives at xxx" mentioned in the embodiments of the present disclosure refers to the time when the data reaches xxx. For example, the time when the data arrives at an AS layer of the terminal device refers to the time when the data reaches the AS layer of the terminal device; the time when the data arrives at a PDCP refers to the time when data reaches the PDCP. It should be understood that if similar descriptions appear in the subsequent embodiments, the same understanding should be maintained as herein, which will not be elaborated in the present disclosure.

With regard to the above contents, the embodiments of the present disclosure will take the case that the terminal device stops, suspends, or does not enable the second timer when the first condition is satisfied as an example for exemplary description.

In some embodiments, the network device configures a second timer, and the terminal device starts the second timer when the PDCP receives data. The terminal device stops or suspends or does not enable a CGT and/or CGRT when the second timer expires. The CGT and/or CGRT that is stopped or suspended or not enabled is/are maintained for a UL grant that includes the data.

In some embodiments, the network device configures a second timer, and the terminal device starts the second timer when the PDCP receives data. The terminal device stops or suspends or does not enable a HARQ RTT timer when the second timer expires. The HARQ RTT timer that is stopped or suspended or not enabled is maintained for a HARQ process that includes the data.

In some embodiments, the network device configures a second timer, and the terminal device starts the second timer when reporting a MAC PDU or UL grant transmission. When the second timer expires, the terminal device stops or suspends or does not enable a CGT and/or CGRT. The CGT and/or CGRT that is stopped or suspended or not enabled is/are maintained for the UL grant.

In some embodiments, the network device configures a second timer, and the terminal device starts the second timer when reporting a MAC PDU or UL grant transmission. When the second timer expires, the terminal device stops or suspends or does not enable a HARQ RTT timer. The HARQ RTT timer that is stopped or suspended or not enabled is maintained for a HARQ process of the MAC PDU or the UL grant.

In some embodiments, in case that the suspended timer is restarted, the timer is run according to the initial value of the timer, or the timer continues to run according to the value of the timer when being suspended.

Through the above methods, the first condition is determined based on the first duration or the second timer, and when the first condition is satisfied, the terminal device does not transmit data, which can avoid wasting resources to transmit data that does not satisify the condition, thereby improving the system capacity.

### 2. Determining the first condition based on the first information

In some embodiments, the first information is used to configure or indicate whether to allow or enable the terminal device to perform the first behavior. In some embodiments, the first information is used to configure a first behavior among a plurality of behaviors. In some embodiments, the plurality of behaviors include stopping or not enabling or suspending a first timer, not transmitting data, flushing a buffer, and clearing a HARQ process.

In some embodiments, the first information may configure or indicate whether to allow or enable the terminal device to perform the first behavior in an explicit indication manner, or may configure or indicate whether to allow or enable the terminal device to perform the first behavior in an implicit indication manner, which is not limited in the present disclosure. Exemplarily, if the terminal device receives the first information, it is considered that the terminal device is allowed to perform the first behavior. Exemplarily, the first information includes a first information field for configuring or indicating whether to allow or enable the terminal device to perform the first behavior. Exemplarily, the value of the first information field being a first value indicates that the terminal device is allowed to perform the first behavior, and the value of the first information field being a second value indicates that the terminal device is not allowed to perform the first behavior. For example, the value of the first information field being 1 indicates that the terminal device is allowed to perform the first behavior, and the value of the first information field being 0 indicates that the terminal device is not allowed to perform the first behavior. In some embodiments, the first information field may be represented by one bit, or may be represented by a plurality of bits, which is not limited in the present disclosure.

In some embodiments, in case that the terminal device has the capability of performing the first behavior, the first condition is determined based on the first information. Exemplarily, when the terminal device has the capability to perform the first behavior, if the terminal device receives the first information, the first condition is determined based on the first information. Exemplarily, when the terminal device does not have the capability to perform the first behavior, it is not necessary to determine the first condition even if the terminal device receives the first information.

In some embodiments, the first condition may also be determined based on the first information when the terminal device does not have the capability to perform the first behavior. Exemplarily, when the terminal device has no capability to perform the first behavior, if the terminal device receives the first information, the first condition is determined based on the first information.

In some embodiments, the first information is used to configure or indicate a first object performing the first behavior.

In some embodiments, the first information is used to configure or indicate whether the terminal device is allowed or enabled to perform the first behavior.

In some embodiments, the first information is used to configure or indicate whether the terminal device is allowed or enabled to perform the first behavior for the first object.

In some embodiments, the first information is used to configure or indicate whether the terminal device is allowed or enabled to perform the first behavior within a first period of time.

In some embodiments, the first information is used to configure or indicate whether a terminal device is allowed or enabled to perform the first behavior for the first object within a first period of time.

In some embodiments, the first information is used to configure or indicate whether the terminal device is allowed or enabled to perform the first behavior at a first time.

In some embodiments, the first information is used to configure or indicate whether the terminal device is allowed or enabled to perform the first behavior for the first object at a first time.

In some embodiments, the first object includes at least one of: a DRB, a terminal device, a HARQ process, a CG, a DG, an LCH, an LCG, a MAC PDU, a triggered DSR, a pending DSR, or a DSR MAC CE.

In some embodiments, the first period of time may be a period in which the terminal device transmits data. Exemplarily, the first period of time may be a period in which a HARQ process containing data is transmitted. Exemplarily, the first period of time may be a period in which a grant containing data is transmitted.

In some embodiments, the first period of time may be a period configured by the first information.

In some embodiments, the first information is further used to configure or indicate at least one of: a duration of the first period of time, a start time of the first period of time, or an end time of the first period of time.

In some embodiments, if the first information does not indicate the first period of time or the first time, the terminal device performs the first behavior upon receiving the first information.

In some embodiments, the first information may be dynamically configured or statically configured, which is not limited in the present disclosure.

In some embodiments, the first condition is determined based on the first information and/or the first duration (the second timer). Exemplarily, the first information is used to configure or indicate that the terminal device is allowed to perform the first behavior, and the terminal device performs the first behavior based on the first duration. For example, when the terminal device receives the first information, the terminal device performs the first behavior when the first duration (the second timer) expires. In this case, the start time of the first duration (the second timer) may be configured by the network device, or may be the time at which the first information is received, which is not limited in the present disclosure. Exemplarily, the network device transmits first configuration information to the terminal device, and the first configuration information is used to configure the first duration (the second timer).

Through the above method, the first information is used to indicate or configure whether the terminal device is allowed or enabled to perform the first behavior, so that the terminal device can avoid wasting resources to transmit data that does not satisfy the condition, thereby improving the system capacity.

### 3. Determine the first condition based on the transmission situation of the data

In some embodiments, the transmission situation of the data includes at least one of: DSR information is reported for the data, a PDU, or a SDU; the DSR information includes the data or PDU or SDU; a MAC PDU has been packeted, at least part of the data or PDU or SDU is transmitted; the data or PDU or SDU is not deleted; the data or PDU or SDU is packeted or transmitted; the MAC PDU includes the data or PDU or SDU satisfying a delay situation; or, data, PDUs, or SDUs included in the MAC PDU are all data or SDUs satisfying the delay situation.

In some embodiments, the delay situation may also be referred to as a delay condition or a delay state, which is not limited in the present disclosure.

In some embodiments, the first condition is determined based on the data transmission situation and the first duration (the first timer). Exemplarily, when the above data transmission situation exists, if the first duration (the first timer) expires, the first behavior is performed.

With regard to the above contents, the embodiments of the present disclosure will take the case that the terminal device stops, suspends, or does not enable the second timer when the first condition is satisfied as an example for exemplary description.

In some embodiments, DSR information is reported for the data, or the DSR information includes the data, the MAC PDU carrying the data is not allowed to be retransmitted, and further, the terminal device stops or suspends or does not enable the associated second timer.

In some embodiments, if information of the data carried in a MAC PDU is reported in a DSR MAC CE, an HARQ RTT timer of a HARQ process for the MAC PDU is stopped, or suspended, or not enabled.

In some embodiments, if information of the data carried in a MAC PDU is reported in a DSR MAC CE, a CGT and/or CGRT for the MAC PDU is/are stopped, or suspended, or not enabled.

In some embodiments, if information of the data carried in a MAC PDU is reported in a DSR MAC CE, and the second timer expires, an HARQ RTT timer of a HARQ process for the MAC PDU is stopped, or suspended, or not enabled.

In some embodiments, if information of the data carried in a MAC PDU is reported in a DSR MAC CE, and the second timer expires, a CGT and/or CGRT for the MAC PDU is/are stopped, or suspended, or not enabled.

In some embodiments, if the data is carried in a MAC PDU and the second timer expires, an HARQ RTT timer of a HARQ process for the MAC PDU is stopped, or suspended, or not enabled.

In some embodiments, if the data is carried in a MAC PDU and the second timer expires, a CGT and/or CGRT of a HARQ process for the MAC PDU is/are stopped, or suspended, or not enabled.

In some embodiments, if the data is carried in a MAC PDU and the data satisfies a delay condition (e.g., the remaining time is less than or equal to the Xth threshold, or the data is service data with delay-sensitive requirements, or the HARQ process or the LCH where the data is located is indicated to be capable of performing the first behavior, etc.), an HARQ RTT timer of a HARQ process for the MAC PDU is stopped, or suspended, or not enabled.

In some embodiments, if the data is carried in a MAC PDU and the data satisfies a delay condition (e.g., the remaining time is less than or equal to the Xth threshold, or the data is service data with delay-sensitive requirements, or the HARQ process or the LCH where the data is located is indicated to be capable of performing the first behavior, etc.), a CGT and/or CGRT of a HARQ process for the MAC PDU is/are stopped, or suspended, or not enabled.

In some embodiments, the network device configures a second timer, and when the terminal device reports a DSR MAC CE or transmits a MAC PDU containing the DSR MAC CE, the second timer is started. When the second timer expires, the terminal device stops or suspends or does not enable a CGT and/or CGRT. The CGT and/or CGRT that is stopped or suspended or not enabled is/are maintained for the UL grant, and data corresponding to the information involved or reported in the DSR is carried in the UL grant, or all data carried in the UL grant is data corresponding to the information involved or reported in the DSR.

In some embodiments, the network device configures a second timer, and when the terminal device reports a DSR MAC CE or transmits a MAC PDU containing the DSR MAC CE, the second timer is started. When the second timer expires, the terminal device stops or suspends or does not enable an HARQ RTT timer. The HARQ RTT timer that is stopped or suspended or not enabled is maintained for the HARQ process, and data corresponding to the information involved or reported in the DSR is carried in the HARQ process, or all data carried in the UL grant is data corresponding to the information involved or reported in the DSR.

Through the above method, the first condition is determined based on the data transmission situation, and when the first condition is satisfied, the terminal device performs the first behavior and no longer transmits data, which can effectively avoid wasting resources to transmit data that does not satisfy the condition, thereby improving the system capacity.

### 4. Determining the first condition based on the delay situation of the data

In some embodiments, the first condition is that the delay of the data is less than or equal to a first threshold.

In some embodiments, the first threshold is configured by the network device. Exemplarily, the network device transmits second configuration information to the terminal device, and the second configuration information is used to configure the first threshold.

In some embodiments, the first threshold is less than a trigger threshold of a DSR MAC CE.

In some embodiments, the first threshold may also be determined by the terminal device based on the implementation of the terminal device. For example, the terminal device determines the first threshold less than the trigger threshold of the DSR MAC CE based on its own implementation.

In some embodiments, the first threshold is configured for at least one of the following objects: a DRB, a terminal device, a HARQ process, a CG, a DG, an LCH, an LCG, or a MAC entity.

In some embodiments, the first condition is that the data has a specific latency requirement.

In some embodiments, the delay is a remaining delay. In some embodiments, the remaining delay refers to the remaining time length of the delay pre-configured for the data.

In some embodiments, the delay is a delay determined based on a PDCP discard timer.

In some embodiments, the delay is determined based on a configured duration or remaining duration of the PDCP discard timer, which is not limited in the present disclosure. In some embodiments, the delay is determined based on the configured duration of the PDCP discard timer. In some embodiments, the delay is determined based on the remaining duration of the PDCP discard timer.

In some embodiments, the delay may be a delay inferred based on the PDCP discard timer.

In some embodiments, the delay is a delay determined based on a PDB or a PSDB.

In some embodiments, the delay is the remaining time for the data to satisfy the PDB or PSDB requirement.

In some embodiments, the first condition is determined based on the delay situation of the data and the first duration (the second timer). Exemplarily, the first condition is that the delay of the data is less than or equal to the first threshold and exceeds the first duration. Exemplarily, the first condition is that the data has a specific latency requirement, and the second timer expires.

In some embodiments, the first condition is determined based on the delay situation of the data and the transmission situation of the data. Exemplarily, the first condition is that the delay of the data is less than or equal to the first threshold, and the terminal device reports DSR information for the data.

With regard to the above contents, the embodiments of the present disclosure will take the case that the terminal device stops, suspends, or does not enable the second timer when the first condition is satisfied as an example for exemplary description.

In some embodiments, the network device configures a first threshold, and if the remaining delay of the data is less than the first threshold, the terminal device stops or suspends or does not enable a CGT and/or CGRT. The CGT and/or CGRT that is stopped or suspended or not enabled is/are maintained for a UL grant that includes the data.

In some embodiments, the network device configures a first threshold, and if the remaining delay of the data is less than the first threshold, the terminal device stops or suspends or does not enable a HARQ RTT timer. The HARQ RTT timer that is stopped or suspended or not enabled is maintained for a HARQ process that includes the data.

In some embodiments, the network device configures a first threshold, and if the remaining delay of the data is less than the first threshold and the terminal device reports DSR information for the data, the terminal device stops or suspends or does not enable a CGT and/or CGRT. The CGT and/or CGRT that is stopped or suspended or not enabled is/are maintained for the UL grant, which includes the data.

In some embodiments, the network device configures a first threshold, and if the remaining delay of the data is less than the first threshold and the terminal device reports DSR information for the data, the terminal device stops or suspends or does not enable a HARQ RTT timer. The HARQ RTT timer that is stopped or suspended or not enabled is maintained for a HARQ process that includes the data.

In some embodiments, when a MAC PDU has been packeted, if the delay of data carried in the MAC PDU is less than the first threshold, a CGT and/or CGRT is/are stopped or suspended or not enabled.

In some embodiments, if the delay of data carried in the MAC PDU is less than a first threshold, a HARQ RTT timer for the MAC PDU is stopped or suspended or not enabled.

Through the above method, the first condition is determined based on the delay situation of data, and when the first condition is satisfied, the terminal device performs the first behavior and no longer transmits data, which can effectively avoid wasting resources to transmit data that does not satisfy the condition, thereby improving the system capacity.

For the methods described in the above embodiments, the present disclosure also supplements the terms or schemes that may be involved in the above embodiments. It should be noted that the following content can be used as a separate method or can be combined with the methods in the above embodiments, and the method obtained by combination shall also fall within the scope of protection of the embodiments of the present disclosure.
1. First, data or an SDU associated with a DSR is described.

In some embodiments, data or an SDU associated with a DSR may involve the following two manners.

Manner 1: An SDU is considered to be associated with a DSR if it is associated with the LCG which triggered the DSR and if it is associated as Delay-critical UL data as defined in TS 38.323 and TS 38.322.

Manner 2: An SDU is considered to be associated with a DSR if it is associated with the LCG which triggered the DSR and if it is associated with a PDU set in which at least one PDCP SDU has the remaining value of its PDCP discardTimer below remainingTimeThreshold.
2. Regarding how to set DRX or DRX_SFN_COUNTER (counter) or NSFN in a DRX formula when a terminal device receives a discontinuous reception (DRX) configuration with a reference SFN indication of 512 within an SFN value range of 0-512, in a case of an SFN (System Frame Number) cycle change

In some embodiments, if a reference SFN indication of 512 is received when the SFN is between 0 and 512, the SFN is initialized to obtain an NSFN, and the NSFN is incremented by 1.

Exemplarily, increment NSFN by 1 after the NSFN initialization operation, if the DRX configuration with "drx-ReferenceSFN =512" is received during the first half of a hyper frame (i.e., SFN is between 0 and 512).

In some embodiments, in case that a DRX non-integer long cycle start offset is configured, if DRX is reconfigured by RRC, DRX_SFN_COUNTER is set to 0 in the first symbol of the slot after successful completion of the RRC reconfiguration; and if the DRX reconfiguration information containing a reference SFN indication of 512 is received when the SFN is between 0 and 512, DRX_SFN_COUNTER is incremented by 1.

In some embodiments, DRX_SFN_COUNTER or NSFN is configured as follows:
1> if the *drx-NonIntegerLongCycleStartOffset* is configured:
   2> if DRX is (re-)configured by RRC:
      3> set *DRX_SFN_COUNTER* to 0 in the first symbol of the slot immediately after the successful completion of the RRC (re-)configuration;
      3> increment *DRX_SFN_COUNTER* by 1 if the DRX (re)-configraution containing *drx-TimeReferenceSFN* equals 512 is received between SFN 0 and SFN 512.
   2> increment *DRX_SFN_COUNTER* by 1 in the first symbol of a slot in which SFN changes to 0.

In some embodiments, in case that a DRX non-integer long cycle start offset is configured, if DRX is reconfigured by RRC, DRX_SFN_COUNTER is set to 0 in the first symbol of the slot after successful completion of the RRC reconfiguration, and DRX_SFN_COUNTER is incremented by 1 in the first symbol of the slot in which SFN changes to 0.

In some embodiments, DRX_SFN_COUNTER or NSFN is configured as follows:
1> if the *drx-NonIntegerLongCycleStartOffset* is configured:
   2> if DRX is (re-)configured by RRC:
      3> set *DRX_SFN_COUNTER* to 0 in the first symbol of the slot immediately after the successful completion of the RRC (re-)configuration;
   2> increment *DRX_SFN_COUNTER* by 1 in the first symbol of a slot in which SFN changes to 0.

The above methods provide a scheme for a terminal device to set DRX_SFN_COUNTER or NSFN in a case of an SFN cycle change, thereby avoiding errors occurring in the terminal device when the SFN cycle is changed.

### 3. Regarding a case where a DSR triggers a status report (SR)

In some embodiments, for the case where the DSR triggers the SR, an SR transmission delay mechanism may be introduced, or may not be introduced.

Mode 1: No SR transmission delay mechanism is introduced for a DSR-triggered SR. In some embodiments, the SR corresponding to the DSR is triggered without considering the expiry of the delay timer. In other words, the SR corresponding to the DSR can be triggered without waiting for the expiry of the delay timer.

Mode 2: The SR transmission delay mechanism is introduced for a DSR-triggered SR. That is, the SR corresponding to the DSR can be triggered only when the delay timer expires.

In some embodiments, the delay timer is a dedicated timer for the DSR, or the delay timer is the same delay timer as that used for the SR triggered by the corresponding BSR. In some embodiments, if the delay timer is a dedicated timer for the DSR, the delay timer is carried in the DSR configuration. Exemplarily, the delay timer is carried in LCG-DSR-Config.

In some embodiments, the delay timer is configured if logicalChannelSR-DelayTimerApplied is set or present, or if logicalChannelSR-DelayTimerApplied is set to a first value. In some embodiments, the first value is true, indicating that the delay timer may be configured.

In some embodiments, the delay timer is started when logicalChannelSR-DelayTimerApplied is set to the first value and the DSR is triggered. In some embodiments, when logicalChannelSR-DelayTimerApplied is set to the first value, and a DSR is triggered, and a delay timer has not been started for the same LCH (or the delay timer has not been allowed for the same LCH), the delay timer (or the delay timer for the LCH) is started.

In some embodiments, when a DSR is triggered and the delay timer for the DSR is not running, an SR is triggered. In some embodiments, when the DSR is triggered and the delay timer for the DSR is not running, if no uplink shared channel (UL-SCH) is available to carry a new transmission, the SR is triggered.

In some embodiments, when a DSR is triggered and a delay timer for one LCH is not running, the SR for this LCH is triggered. In some embodiments, when a DSR is triggered, and a delay timer for one LCH is not running, if no UL-SCH is available to carry a new transmission, the SR for this LCH is triggered.

In some embodiments, if a DSR is triggered and logicalChannelSR-Mask is set to a second value, the SR may be triggered. In some embodiments, the second value is false.

In some embodiments, if a DSR is triggered, the MAC entity is configured with a CG and/or logicalChannelSR-Mask is set to a second value, and in combination with a delay timer, an SR may be triggered. Exemplarily, if a DSR is triggered, the MAC entity is configured with a CG and/or logicalChannelSR-Mask is set to false, and the delay timer expires, an SR may be triggered. Exemplarily, if a DSR is triggered, the MAC entity is configured with a CG and/or logicalChannelSR-Mask of the LCH is set to false, and the delay timer for the LCH is expires, the SR of the LCH may be triggered.

The above methods provide a scheme for triggering an SR corresponding to a DSR, which ensures that the SR can be triggered normally.

### 4. Triggering an emergency call in a case of cell DRX

In some embodiments, if a terminal device is not allowed to perform uplink grant transmission on any serving cell based on the cell DRX mechanism, the terminal device triggers an emergency call on a special cell (SPCell). In some embodiments, the SPCell includes a primary cell (PCell) and a primary secondary cell (PSCell). In some embodiments, the terminal device triggers a random access channel (RACH) on the SPCell for an emergency call.

In some embodiments, UE triggers RACH on the SpCell for an emergency call if no serving cell configured for the UE has the uplink grant that is allowed to be transmitted based on the cell DRX mechanism.

In some embodiments, UE triggers RACH on the SpCell for an emergency call if no available uplink grant transmission is allowed on any serving cell of the UE based on the cell DRX mechanism.

In some embodiments, if the cell DRX is activated and a serving cell is not in an active period (or the serving cell is in a sleep period), the terminal device performs at least one of the following operations.
1> if cell DRX is activated and the Serving Cell is not in the cell DRX Active Period:
   2> not instruct the physical layer to signal a SR on a PUCCH resource for SR;
   2> not increment the *SR_COUNTER* for a SR;
   2> not start the *sr-ProhibitTimer* for a SR;
   2> not deliver any configured uplink grant and the associated HARQ information to the HARQ entity;
   2> not instruct a HARQ process associated with a configured uplink grant to trigger a new transmission or a retransmission;
   2> not report periodic CSI on PUCCH and semi-persistent CSI configured on PUSCH;
   2> if an emergency service is initiated by upper layers and this Serving Cell is the SpCell; and
   2> if there is no available UL-SCH resource on any other serving cell, if any, on which cell DRX is deconfigured, or deactivated, or in the Active Period:
      3> initiate a Random Access procedure.

Through the above methods, when a terminal device is in a DRX sleep cycle, the terminal device still can perform an emergency call, so as to avoid influencing the service of the terminal device and ensure the stability of the communication service.

It is to be noted that the first behavior includes at least one of: stopping or not enabling or suspending the first timer, not transmitting data, flushing a buffer, or clearing a HARQ process. The above embodiments take the first behavior being stopping or not enabling or suspending the second timer as an example for exemplary description, and the contents involved in the above embodiments are also applicable to the behaviors other than stopping, suspending, or not enable the second timer.

It should be noted that the above embodiments illustrate possible combinations of 1 to 4 by way of example. The methods provided in the embodiments of the present disclosure may also be combined to obtain other methods, and the combined methods shall also fall within the protection scope of the embodiments of the present disclosure.

The following are apparatus embodiments of the present disclosure, which can be used to perform the method embodiments of the present disclosure. For details not disclosed in the apparatus embodiments of the present disclosure, reference may be made to the method embodiments of the present disclosure.

FIG. 3 illustrates a block diagram of a data transmission apparatus according to an embodiment of the present disclosure. The apparatus has a function of implementing the data transmission method examples described above, and the function may be realized by hardware, or may be realized by hardware executing corresponding software. The apparatus may be the terminal device described above, or may be provided in the terminal device. As illustrated in FIG. 3, the apparatus 300 may include a processing module 310.

The processing module 310 is configured to perform a first behavior if a first condition is satisfied. The first behavior includes at least one of: stopping a first timer, not enabling the first timer, suspending the first timer, not transmitting data, flushing a buffer, or clearing a HARQ process.

In some embodiments, the first timer is associated with transmission of the data, and/or the first condition is associated with a delay of the data.

In some embodiments, the first timer includes at least one of: a CGT, a CGRT, a HARQ RTT timer, or a HARQ retransmission timer.

In some embodiments, the first condition is determined based on at least one of: a first duration, a second timer, first information, a transmission situation of the data, or a delay of the data. The second timer is used to control a transmission time of the data or a storage time of the data, and the first information is used to configure or indicate whether the terminal device is allowed to perform the first behavior.

In some embodiments, when the first condition is determined based on the first duration or the second timer, the first condition is that: the first duration is exceeded, or the second timer expires or is not running or stops.

In some embodiments, the duration of the second timer is the first duration.

In some embodiments, the first duration or the second timer is configured for at least one of: a DRB, a terminal device, a HARQ process, a CG, a DG, an LCH, an LCG, or a MAC entity.

In some embodiments, the first duration or the second timer is maintained for at least one of: a DRB, a terminal device, a HARQ process, a CG, a DG, an LCH, an LCG, a MAC entity, a MAC PDU, a triggered DSR, a pending DSR, or a DSR MAC CE.

In some embodiments, the first duration is associated with a length or running state of a PDCP discard timer; or, the first duration is associated with a PDB and/or a PSDB.

In some embodiments, a start time of the first duration or the second timer is one of the following: a time when the data arrives at an AS layer of the terminal device, a time when the data arrives at a PDCP, a time when the PDCP receives the data, a start time of a PDCP discard timer, a triggering time of a DSR, a time of generating a DSR MAC CE, a time of generating a MAC PDU containing the data, a time when a MAC PDU containing the data is transmitted, a time when a grant containing the data is transmitted, a time when a grant corresponding to the data is transmitted, a time of generating a MAC PDU containing a DSR MAC CE, a time when a MAC PDU containing a DSR MAC CE is transmitted, a time of transmission of a grant or a packet containing a DSR MAC CE, or a time when a grant or a packet containing a DSR MAC CE is sent.

In some embodiments, the first information is used to configure or indicate a first object performing the first behavior.

Alternatively, the first information is used to configure or indicate whether to allow or enable the terminal device to perform the first behavior.

Alternatively, the first information is used to configure or indicate whether to allow or enable the terminal device to perform the first behavior for the first object.

Alternatively, the first information is used to configure or indicate whether to allow or enable the terminal device to perform the first behavior within a first period of time.

Alternatively, the first information is used to configure or indicate whether to allow or enable the terminal device to perform the first behavior for the first object within the first period of time.

Alternatively, the first information is used to configure or indicate whether to allow or enable the terminal device to perform the first behavior at a first time.

Alternatively, the first information is used to configure or indicate whether to allow or enable the terminal device to perform the first behavior for the first object at the first time.

The first object includes at least one of a DRB, the terminal device, a HARQ process, a CG, a DG, an LCH, an LCG, a MAC PDU, a triggered DSR, a pending DSR, or a DSR MAC CE.

In some embodiments, the transmission situation of the data includes at least one of: DSR information is reported for the data, or a PDU, or a SDU; the DSR information includes the data or PDU or SDU; a MAC PDU has been packeted; at least part of the data or PDU or SDU is transmitted; the data or PDU or SDU is not deleted; the data or PDU or SDU is packeted or transmitted; the MAC PDU includes the data or PDU or SDU satisfying a delay condition; or, data or PDUs or SDUs included in the MAC PDU are all data or SDUs satisfying the delay condition.

In some embodiments, the first condition is that the delay of the data is less than or equal to a first threshold; or, the first condition is that the data has a specific latency requirement.

In some embodiments, the delay is a remaining delay.

Alternatively, the delay is a delay determined based on a PDCP discard timer.

Alternatively, the delay is a delay determined based on a PDB or a PSDB.

Alternatively, the delay is a remaining time for the data to meet PDB or PSDB requirements.

In some embodiments, the first threshold is configured by a network device.

In some embodiments, the first threshold is less than a trigger threshold of a DSR MAC CE.

In some embodiments, the first threshold is configured for at least one of: a DRB, the terminal device, a HARQ process, a CG, a DG, an LCH, an LCG, or a MAC entity.

In some embodiments, the apparatus 300 further includes a receiving module (not shown).

The receiving module is configured to receive second information transmitted by a network device. The second information is used to indicate that the network device successfully receives the data.

Alternatively, the receiving module is configured to receive third information transmitted by the network device. The third information is used to instruct the terminal device to retransmit the data.

According to the technical solutions provided by the embodiments of the present disclosure, when the first condition is satisfied, the terminal device performs the first behavior and no longer transmits data, which can effectively avoid wasting resources to transmit data that does not meet the condition, thereby improving the system capacity.

It should be noted that when the apparatus provided in the above embodiments implements its functions, the description is given merely by taking the division of the above function modules as an example. In practical applications, the above functions can be assigned to different functional modules according to actual needs; that is, the internal structure of the device is divided into different functional modules to complete all or part of the functions described above.

With regard to the apparatus in the above embodiments, the specific manner in which each module performs an operation has been described in detail in the embodiments related to the method and will not be elaborated herein.

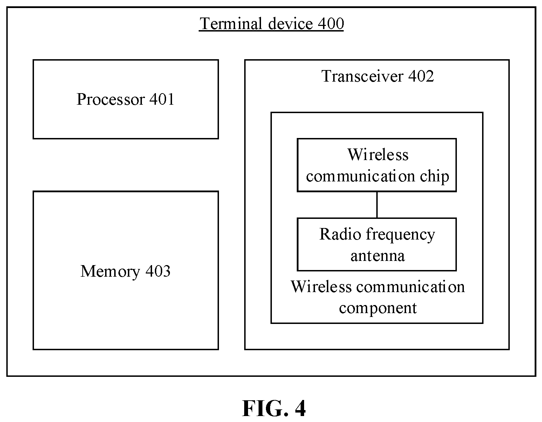

FIG. 4 illustrates a schematic structural diagram of a terminal device according to an embodiment of the present disclosure. The terminal device 400 may include a processor 401, a transceiver 402, and a memory 403. The transceiver 402 is configured to implement the functions of transmission and/or reception, and the processor 401 may be used to implement other processing functions or control transmission and/or reception, such as the functions of the processing module 310 described above.

The processor 401 includes one or more processing cores, and the processor 401 executes various functional applications and information processing by running software programs and modules.

The transceiver 402 may include a receiver and a transmitter. For example, the receiver and the transmitter may be implemented as the same wireless communication component, which may include a wireless communication chip and a radio frequency antenna.

The memory 403 may be coupled to the processor 401 and the transceiver 402.

The memory 403 may be configured to store a computer program executed by a processor, and the processor 401 is configured to execute the computer program to implement various operations in the method embodiments described above.

In some embodiments, the processor 401 is configured to perform a first behavior if a first condition is satisfied. The first behavior includes at least one of: stopping or not enabling or suspending a first timer, not transmitting data, flushing a buffer, or clearing a HARQ process.

For details not described in detail in this embodiment, reference may be made to the above embodiments, which will not be elaborated herein.

Furthermore, the memory may be implemented by any type of volatile or non-volatile storage devices or a combination thereof. The volatile or non-volatile storage devices include, but are not limited to, a magnetic or optical disk, an electrically erasable programmable read-only memory (EEPROM), an erasable programmable read-only memory (EPROM), a static random access memory (SRAM), a read-only memory (ROM), a magnetic memory, a flash memory, and a programmable read-only memory (PROM).

The embodiments of the present disclosure further provide a computer-readable storage medium having a computer program stored therein. The computer program is used to be executed by a processor to implement the data transmission method on the terminal device side described above. In some embodiments, the computer-readable storage medium may include: a read-only memory (ROM), a random-access memory (RAM), a solid state drive (SSD), an optical disc, or the like. The RAM may include a resistance random access memory (ReRAM) and a dynamic random access memory (DRAM).

The embodiments of the present disclosure further provide a chip. The chip includes programmable logic circuitry and/or program instructions, and when the chip is operating, the chip is used to implement the data transmission method on the terminal device side described above.

The embodiments of the present disclosure further provide a computer program product. The computer program product includes a computer program stored in a computer-readable storage medium, and a processor reads and executes the computer program from the computer-readable storage medium to implement the data transmission method on the terminal device side described above.

It should be understood that the term "indication" mentioned in the embodiments of the present disclosure may be a direct indication, an indirect indication, or an indication of an associated relationship. For example, an indication of B by A may indicate that A directly indicates B, for example, B is obtained through A, or that A indirectly indicates B, for example, A indicates C and B is obtained through C, or that there is an association between A and B.

In the description of the embodiments of the present disclosure, the term "correspondence" may indicate that there is a direct correspondence or indirect correspondence between two elements, or may indicate that there is an association relationship between the two elements, or may indicate a relationship between indicating and being indicated, or between configuring and being configured, etc.

In some embodiments of the present disclosure, "predefined" may be implemented by pre-storing the corresponding codes, tables, or other manners for indicating relevant information in the device (for example, including a terminal device and a network device), and the specific implementations thereof are not limited in the present disclosure. For example, "predefined" may refer to those defined in a protocol.

In some embodiments of the present disclosure, the "protocol" may refer to a standard protocol in the field of communication, which may include, for example, an LTE protocol, a NR protocol and relevant protocol applied in the future communication system, which is not limited in the present disclosure.

The term "a plurality/multiple" mentioned in the present disclosure refers to two or more. The term "and/or" describes an association relationship of associated objects and represents three relationships. For example, A and/or B may represent the following three cases: independent existence of A, existence of both A and B, and independent existence of B. The character "/" generally represents that previous and next associated objects form an "or" relationship.

In the present disclosure, "greater than or equal to" may represent greater than or equal to or greater than, and "less than or equal to" may represent less than or equal to or less than.

In addition, the numbering of the operations described herein only exemplifies a possible sequence of execution between the operations. In some other embodiments, the above operations may also be performed in a different numbering sequence; for example, two different numbered operations are performed simultaneously, or, two different numbered operations are performed in the reverse sequence to the illustration, which will not be limited by the embodiments of the present disclosure.

Those skilled in the art will appreciate that, in one or more of the aforementioned examples, the functions described in the embodiments of the present disclosure may be implemented in hardware, software, firmware or any combination thereof. When being implemented in the software, these functions may be stored in a computer-readable medium or transmitted as one or more instructions or codes on the computer-readable medium. The computer-readable medium includes a computer storage medium and a communication medium, where the communication medium includes any medium that facilitates the transfer of the computer program from one place to another place. The storage medium may be any available medium accessible to a general-purpose computer or a special-purpose computer.

The above description is only exemplary embodiments of the present disclosure and is not intended to limit the present disclosure. Any modification, equivalent replacement, improvement, etc. made within the spirit and principles of the present disclosure shall be included in the scope of protection of the present disclosure.

## Claims

1. A method for data transmission, performed by a terminal device, the method comprising:
performing a first behavior if a first condition is satisfied;
wherein the first behavior comprises at least one of: stopping a first timer, not enabling the first timer, suspending the first timer, not transmitting data, flushing a buffer, or clearing a hybrid automatic repeat request, HARQ, process.

2. The method of claim 1, wherein the first timer is associated with transmission of the data, and/or the first condition is associated with a delay of the data.

3. The method of claim 1 or 2, wherein the first timer comprises at least one of: a configured grant timer, CGT, a configured grant retransmission timer, CGRT, a HARQ round-trip time, RTT, timer, or a HARQ retransmission timer.

4. The method of any one of claims 1 to 3, wherein the first condition is determined based on at least one of: a first duration, a second timer, first information, a transmission situation of the data, or a delay of the data, wherein the second timer is used to control a transmission time of the data or a storage time of the data, and the first information is used to configure or indicate whether the terminal device is allowed to perform the first behavior.

5. The method of claim 4, wherein in case that the first condition is determined based on the first duration or the second timer, the first condition is that: the first duration is exceeded, or the second timer expires or is not running or stops.

6. The method of claim 5, wherein a duration of the second timer is the first duration.

7. The method of claim 5 or 6, wherein the first duration or the second timer is configured for at least one of: a data radio bearer, DRB, the terminal device, a HARQ process, a configured grant, CG, a dynamic grant, DG, a logical channel, LCH, a logical channel group, LCG, or a media access control, MAC, entity.

8. The method of any one of claims 5 to 7, wherein the first duration or the second timer is maintained for at least one of: a DRB, the terminal device, a HARQ process, a CG, a DG, an LCH, an LCG, a MAC entity, a MAC protocol data unit, PDU, a triggered delay status report, DSR, a pending DSR, or a DSR MAC control element, CE.

9. The method of any one of claims 5 to 8, wherein the first duration is associated with a length or running state of a packet data convergence protocol, PDCP, discard timer; or,
the first duration is associated with a packet delay budget, PDB, and/or a PDU set delay budget, PSDB.

10. The method of any one of claims 5 to 9, wherein a start time of the first duration or the second timer is one of the following: a time when the data arrives at an access stratum, AS, layer of the terminal device, a time when the data arrives at a PDCP, a time when the PDCP receives the data, a start time of a PDCP discard timer, a triggering time of a DSR, a time when a DSR MAC CE is generated, a time when a MAC PDU containing the data is generated, a time when a MAC PDU containing the data is transmitted, a time when a grant containing the data is transmitted, a time when a grant corresponding to the data is transmitted, a time when a MAC PDU containing a DSR MAC CE is generated, a time when a MAC PDU containing a DSR MAC CE is transmitted, a time of transmission of a packet containing a DSR MAC CE, a time of transmission of a grant containing a DSR MAC CE, or a time when a grant or a packet containing a DSR MAC CE is sent.

11. The method of claim 4, wherein
the first information is used to configure or indicate a first object performing the first behavior; or,
the first information is used to configure or indicate whether to allow or enable the terminal device to perform the first behavior; or,
the first information is used to configure or indicate whether to allow or enable the terminal device to perform the first behavior for the first object; or,
the first information is used to configure or indicate whether to allow or enable the terminal device to perform the first behavior within a first period of time; or,
the first information is used to configure or indicate whether to allow or enable the terminal device to perform the first behavior for the first object within the first period of time; or,
the first information is used to configure or indicate whether to allow or enable the terminal device to perform the first behavior at a first time; or,
the first information is used to configure or indicate whether to allow or enable the terminal device to perform the first behavior for the first object at the first time;
wherein the first object comprises at least one of: a DRB, the terminal device, a HARQ process, a CG, a DG, an LCH, an LCG, a MAC PDU, a triggered DSR, a pending DSR, or a DSR MAC CE.

12. The method of claim 4, wherein the transmission situation of the data comprises at least one of:
DSR information is reported for the data, a PDU, or a service data unit, SDU;
the DSR information comprises the data, the PDU, or the SDU;
a MAC PDU has been packeted;
at least part of the data, the PDU, or the SDU is transmitted;
the data, the PDU, or the SDU is not deleted;
the data, the PDU, or the SDU is packeted or transmitted;
the MAC PDU comprises data, a PDU, or a SDU satisfying a delay condition; or,
data, PDUs, or SDUs comprised in the MAC PDU are all data or SDUs satisfying the delay condition.

13. The method of claim 4, wherein the first condition is that the delay of the data is less than or equal to a first threshold; or, the first condition is that the data has a specific latency requirement.

14. The method of claim 13, wherein the delay is a remaining delay; or,
the delay is a delay determined based on a PDCP discard timer; or,
the delay is a delay determined based on a PDB or a PSDB; or,
the delay is a remaining time for the data to meet PDB or PSDB requirements.

15. The method of claim 13 or 14, wherein the first threshold is configured by a network device.

16. The method of any one of claims 13 to 15, wherein the first threshold is less than a trigger threshold of a DSR MAC CE.

17. The method of any one of claims 13 to 16, wherein the first threshold is configured for at least one of: a DRB, the terminal device, a HARQ process, a CG, a DG, an LCH, an LCG, or a MAC entity.

18. The method of any one of claims 1 to 17, further comprising:
receiving second information transmitted by a network device, wherein the second information indicates that the network device successfully receives the data; or,
receiving third information transmitted by the network device, wherein the third information instructs the terminal device to retransmit the data.

19. An apparatus for data transmission, comprising:
a processing module, configured to perform a first behavior if a first condition is satisfied;
wherein the first behavior comprises at least one of: stopping a first timer, not enabling the first timer, suspending the first timer, not transmitting data, flushing a buffer, or clearing a hybrid automatic repeat request, HARQ, process.

20. The apparatus of claim 19, wherein the first timer is associated with transmission of the data, and/or the first condition is associated with a delay of the data.

21. The apparatus of claim 19 or 20, wherein the first timer comprises at least one of: a configured grant timer, CGT, a configured grant retransmission timer, CGRT, a HARQ round-trip time, RTT, timer, or a HARQ retransmission timer.

22. The apparatus of any one of claims 19 to 21, wherein the first condition is determined based on at least one of: a first duration, a second timer, first information, a transmission situation of the data, or a delay of the data, wherein the second timer is used to control a transmission time of the data or a storage time of the data, and the first information is used to configure or indicate whether a terminal device is allowed to perform the first behavior.

23. The apparatus of claim 22, wherein in case that the first condition is determined based on the first duration or the second timer, the first condition is that: the first duration is exceeded, or the second timer expires or is not running or stops.

24. The apparatus of claim 23, wherein a duration of the second timer is the first duration.

25. The apparatus of claim 23 or 24, wherein the first duration or the second timer is configured for at least one of: a data radio bearer, DRB, the terminal device, a HARQ process, a configured grant, CG, a dynamic grant, DG, a logical channel, LCH, a logical channel group, LCG, or a media access control, MAC, entity.

26. The apparatus of any one of claims 23 to 25, wherein the first duration or the second timer is maintained for at least one of: a DRB, the terminal device, a HARQ process, a CG, a DG, an LCH, an LCG, a MAC entity, a MAC protocol data unit, PDU, a triggered or pending delay status report, DSR, or a DSR MAC control element, CE.

27. The apparatus of any one of claims 23 to 26, wherein the first duration is associated with a length or running state of a packet data convergence protocol, PDCP, discard timer; or,
the first duration is associated with a packet delay budget, PDB, and/or a PDU set delay budget, PSDB.

28. The apparatus of any one of claims 23 to 27, wherein a start time of the first duration or the second timer is one of the following: a time when the data arrives at an access stratum, AS, layer of the terminal device, a time when the data arrives at a PDCP, a time when the PDCP receives the data, a start time of a PDCP discard timer, a triggering time of a DSR, a time when a DSR MAC CE is generated, a time when a MAC PDU containing the data is generated, a time when a MAC PDU containing the data is transmitted, a time when a grant containing the data is transmitted, a time when a grant corresponding to the data is transmitted, a time when a MAC PDU containing a DSR MAC CE is generated, a time when a MAC PDU containing a DSR MAC CE is transmitted, a time of transmission of a grant or a packet containing a DSR MAC CE, or a time when a grant or a packet containing a DSR MAC CE is sent.

29. The apparatus of claim 22, wherein
the first information is used to configure or indicate a first object performing the first behavior; or,
the first information is used to configure or indicate whether to allow or enable the terminal device to perform the first behavior; or,
the first information is used to configure or indicate whether to allow or enable the terminal device to perform the first behavior for the first object; or,
the first information is used to configure or indicate whether to allow or enable the terminal device to perform the first behavior within a first period of time; or,
the first information is used to configure or indicate whether to allow or enable the terminal device to perform the first behavior for the first object within the first period of time; or,
the first information is used to configure or indicate whether to allow or enable the terminal device to perform the first behavior at a first time; or,
the first information is used to configure or indicate whether to allow or enable the terminal device to perform the first behavior for the first object at the first time;
wherein the first object comprises at least one of: a DRB, the terminal device, a HARQ process, a CG, a DG, an LCH, an LCG, a MAC PDU, a triggered DSR, a pending DSR, or a DSR MAC CE.

30. The apparatus of claim 22, wherein the transmission situation of the data comprises at least one of:
DSR information is reported for the data, a PDU, or a service data unit, SDU;
the DSR information comprises the data, the PDU, or the SDU;
a MAC PDU has been packeted;
at least part of the data, the PDU, or the SDU is transmitted;
the data, the PDU, or the SDU is not deleted;
the data, the PDU, or the SDU is packeted or transmitted;
the MAC PDU comprises data, a PDU, or a SDU satisfying a delay condition; or,
data, PDUs, or SDUs comprised in the MAC PDU are all data or SDUs satisfying the delay condition.

31. The apparatus of claim 22, wherein the first condition is that the delay of the data is less than or equal to a first threshold; or, the first condition is that the data has a specific latency requirement.

32. The apparatus of claim 31, wherein the delay is a remaining delay; or,
the delay is a delay determined based on a PDCP discard timer; or,
the delay is a delay determined based on a PDB or a PSDB; or,
the delay is a remaining time for the data to meet PDB or PSDB requirements.

33. The apparatus of claim 31 or 32, wherein the first threshold is configured by a network device.

34. The apparatus of any one of claims 31 to 33, wherein the first threshold is less than a trigger threshold of a DSR MAC CE.

35. The apparatus of any one of claims 31 to 34, wherein the first threshold is configured for at least one of: a DRB, the terminal device, a HARQ process, a CG, a DG, an LCH, an LCG, or a MAC entity.

36. The apparatus of any one of claims 19 to 35, further comprising a receiving module, wherein:
the receiving module is configured to receive second information transmitted by a network device, the second information indicating that the network device successfully receives the data; or,
the receiving module is configured to receive third information transmitted by the network device, the third information instructing a terminal device to retransmit the data.

37. A terminal device, comprising a processor and a memory for storing a computer program, wherein the processor executes the computer program to implement the method of any one of claims 1 to 18.

38. A computer-readable storage medium having stored a computer program thereon, the computer program being executed by a processor to implement the method of any one of claims 1 to 18.

39. A chip, comprising programmable logic circuitry and/or program instructions, wherein the chip is configured for implementing the method of any one of claims 1 to 18 when being in operation.

40. A computer program product, comprising computer instructions stored in a computer-readable storage medium, wherein a processor reads and executes the computer instructions from the computer-readable storage medium to implement the method of any one of claims 1 to 18.
